# FASCICULE DE BREVET EUROPEEN

(11) **EP 2 324 338 B1**
(45) Date de publication et mention de la délivrance du brevet: **07.10.2020**
(21) Numéro de dépôt: 09765902.3
(22) Date de dépôt: 18.06.2009
(51) Int. Cl.: G01N 17/00, G01N 27/18, F22B 37/38

(54) **PROCÉDÉ ET DISPOSITIF POUR LA DÉTECTION ET/OU LA MESURE D'ENCRASSEMENT DANS DES ÉCHANGEURS THERMIQUES**
VERFAHREN UND VORRICHTUNG ZUM NACHWEIS UND/ODER ZUR MESSUNG DER VERSCHMUTZUNG BEI WÄRMETAUSCHERN
METHOD AND DEVICE FOR THE DETECTION AND/OR MEASUREMENT OF FOULING IN HEAT EXCHANGERS

(30) Priorité: 18.06.2008 FR 0854030
(43) Date de publication de la demande: 25.05.2011
(73) Titulaire: Electricité de France, 75008 Paris (FR); Commissariat à l'Énergie Atomique et aux Énergies Alternatives, 75015 Paris (FR)
(72) Inventeur: VEAU, José, F-78360 Montesson (FR); PETIT, Marc, F-95300 Pontoise (FR); TOCHON, Patrice, F-38140 Uriage (FR); CLEMENT, Patrice, F-38120 Saint Egreve (FR)
(74) Mandataire: Regimbeau
(86) Numéro de dépôt international: PCT/EP2009/057629
(87) Numéro de publication internationale: WO 2009/153323

(56) Documents cités:
- WO-A-01/94876
- FR-A- 2 897 930
- US-A- 3 721 897
- US-B1- 6 499 876

## Description

### DOMAINE TECHNIQUE GENERAL ET ART ANTERIEUR

La présente invention est relative à la détection et/ou à la mesure d'encrassement dans les échangeurs.

La problématique d'encrassement dans les échangeurs revêt une importance croissante dans l'industrie. De nombreuses études ont été réalisées afin de réduire cet encrassement, mais aucune n'a débouché à l'heure actuelle sur un gain significatif.

Deux grandes classes d'applications industrielles représentent en particulier des enjeux majeurs.

La première est celle de l'industrie agro-alimentaire, où la réduction et où le meilleur contrôle de l'encrassement représentent un gain en temps d'opération et donc un gain en productivité. Par exemple, une réduction de 2 heures entre deux cycles de nettoyage correspond à un gain minimum de productivité de 10%. De plus, une diminution de l'encrassement entraîne une diminution de la consommation de détergents et autres produits d'entretien. Enfin, un meilleur contrôle de l'encrassement implique un meilleur contrôle du procédé et donc une qualité supérieure pour le produit.

La seconde classe d'applications est celle du refroidissement industriel, notamment pour l'industrie chimique, pétrochimique, ou la production d'énergie (centrales thermiques et nucléaires). Les puissances unitaires de ces systèmes sont en effet très importantes, de sorte qu'une baisse de performance impacte directement les rendements de production. Par ailleurs, un encrassement engendre nécessairement une baisse de la capacité d'échange thermique et crée donc un risque potentiel de surchauffe dans ces systèmes. C'est le cas notamment du refroidissement des centrales nucléaires en cas de canicule.

Ces deux exemples de classes d'application ne sont bien entendu pas limitatifs, la détection et/ou la mesure d'encrassement pouvant bien entendu être également essentielles pour d'autres industries.

Ainsi l'invention s'applique à tous types d'industries.

Elle a pour but général de proposer une solution de détection et/ou de mesure d'encrassement pour des échangeurs de tout type.

On connait déjà de nombreuses techniques destinées à permettre de détecter un éventuel encrassement sur un échangeur.

La plupart des dispositifs existants reposent sur la mesure d'un flux de chaleur pariétal et sur l'observation de la variation de sa valeur temporelle, laquelle peut être plus ou moins bien corrélée à l'encrassement se produisant au niveau de la sonde de mesure.

Des sondes actives ont par exemple été développées utilisant conjointement une résistance électrique et une mesure de température afin de déterminer la variation du coefficient d'échange de chaleur locale en se superposant au flux naturellement véhiculé.

La demande WO 0194876 propose notamment une méthode pour suivre l'encrassement de l'échangeur d'un four à combustion.

Selon la méthode décrite dans cette demande de brevet, on évalue une valeur de résistance d'un réseau qui est par exemple constitué par les tubes des parois d'un échangeur. A cet effet, ce réseau est soumis à un ou plusieurs signaux électriques donnés. La valeur de résistance ainsi calculée est elle-même comparée à une valeur de résistance nominale déterminée sur le même circuit à un instant de référence antérieur. La valeur de résistance ainsi obtenue est par exemple comparée à une valeur seuil au-dessus de laquelle on considère qu'il y a encrassement.

La solution proposée dans cette demande WO 0194876 a toutefois l'inconvénient de ne pouvoir être utilisée qu'avec un fonctionnement du réacteur à un débit et à une température donnés, et en particulier au débit et à la température de fonctionnement du réacteur lors de la mesure de la valeur de résistance de référence.

Du fait de cet inconvénient, cette solution est relativement inadaptée pour bon nombre d'applications.

### PRESENTATION GENERALE DE L'INVENTION

Un but de l'invention est de proposer une solution de détection et/ou de mesure d'encrassement dans un échangeur apte à être mise en œuvre indépendamment des variations de conditions, notamment de débit ou de température, auxquelles celui-ci est soumis.

Un autre but encore est de proposer une solution de détection et/ou de mesure d'encrassement simple et non-intrusive.

A cet effet, l'invention propose selon la revendication 1 un procédé pour la détection et/ou la mesure de l'encrassement dans un échangeur selon lequel on mesure à deux instants différents la valeur résistive d'une résistance surfacique disposée au niveau d'une paroi de cet échangeur et on détermine une valeur de mesure correspondant à une fonction des valeurs résistives mesurées à ces deux instants, où la résistance est soumise successivement à deux niveaux de puissance que l'on maintient chacun pendant une certaine durée, le premier niveau de puissance étant inférieur au second, les mesures des deux valeurs résistives étant respectivement effectuées lors de l'application de ces deux niveaux de puissance.

Notamment, le premier niveau de puissance est choisi, avec la durée pendant laquelle il est appliqué, pour que le flux de chaleur provoqué par l'effet Joule ait une influence sur la surface de l'échangeur et non sur la couche d'encrassement lorsqu'elle existe.

Le second niveau de puissance est choisi de façon que le flux de chaleur provoqué par l'effet Joule ait un impact à la fois sur l'échangeur et sur le dépôt d'encrassement lorsque celui-ci existe.

L'invention propose également un dispositif selon la revendication pour la détection et/ou la mesure d'encrassement dans un échangeur, comportant une résistance surfacique disposée au niveau d'une paroi de cet échangeur, des moyens pour alimenter avec une puissance constante ladite résistance (R), ainsi que des moyens de traitement, configurés pour mettre en œuvre le procédé précité.

Enfin, l'invention porte également sur l'utilisation de ce procédé ou de ce dispositif pour la détection et/ou la mesure d'encrassement dans l'industrie agro-alimentaire ou dans des applications de thermique industrielle.

### DESCRIPTION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique d'une plaque d'échangeur encrassé, équipé d'une résistance surfacique conformément à un mode de mise en œuvre possible de l'invention ;
- la figure 2 est un schéma bloc donnant différentes étapes d'un traitement conforme à un mode de mise en œuvre de l'invention ;
- les figures 3A à 3C illustrent respectivement un exemple de courbe temporelle de puissance électrique injectée sur la résistance surfacique utilisée dans le dispositif de détection, ainsi que les courbes temporelles de valeurs de résistance correspondantes dans les cas où la plaque est non-encrassée et où elle est encrassée ;
- la figure 4 illustre schématiquement un exemple de résistance surfacique qui peut être utilisée pour une mise en œuvre du procédé proposé ;
- la figure 5 illustre différentes évolutions de variations de résistance en fonction de la température pour différents matériaux possibles pour celle-ci ;
- la figure 6 est un schéma bloc illustrant un exemple de dispositif d'encrassement ;
- la figure 7, enfin, illustre un exemple d'électronique d'acquisition et d'alimentation pour un tel dispositif.

### DESCRIPTION D'UN OU PLUSIEURS MODES DE MISES EN ŒUVRE ET DE REALISATION

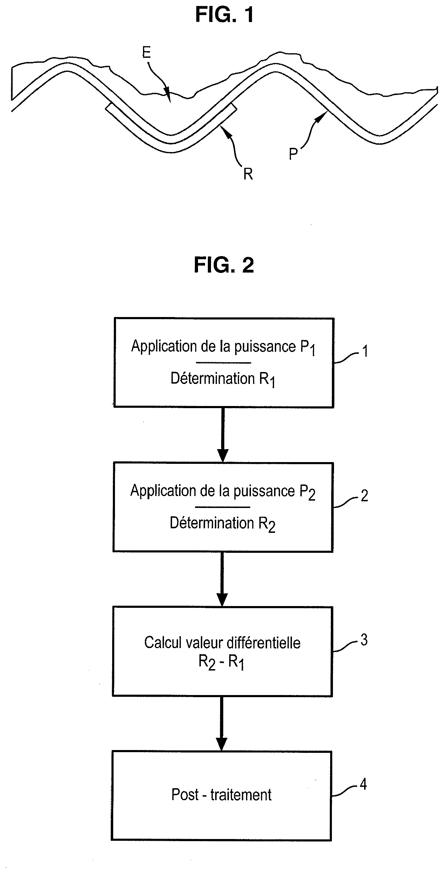

On a représenté sur la figure 1 une plaque P d'échangeur sur laquelle s'est déposé au fil du temps un encrassement E.

Cet échangeur peut être de tout type, notamment un échangeur à convection interne ou externe liquide/gaz, gaz/gaz ou liquide/liquide.

Une résistance électrique surfacique R à coefficient de température positif ou négatif est disposée le long de la paroi d'échange que constitue cette plaque P. Bien entendu, l'échangeur peut ne pas être un échangeur à plaque, mais un échangeur à tubes, la résistance étant disposée le long d'un ou plusieurs tubes.

Comme l'illustre la figure 2, on soumet successivement cette résistance électrique surfacique à deux niveaux de puissance P1 et P2 et on détermine les valeurs R1 et R2 de la résistance R lors de l'application de ces deux niveaux de puissance (étapes 1 et 2).

La puissance P1 est choisie à un niveau qui soit à la fois suffisant pour créer un échauffement significatif de la résistance R (de l'ordre de quelques dixièmes de degrés), mais qui en même temps est suffisamment faible pour que le flux de chaleur local provoqué par effet Joule n'ait - pendant le temps où cette puissance P1 est appliquée à la résistance R - un impact que sur la plaque P (ou le tube de l'échangeur) et non pas sur le dépôt E, le faible niveau de chaleur ne permettant pas la diffusion jusqu'à celui-ci. En pratique, à ce niveau de puissance, les phénomènes de conduction sont confinés à la paroi.

La puissance P2 est plus importante et est choisie de façon que le flux de chaleur local provoqué par effet Joule ait un impact à la fois sur la plaque P (ou le ou les tube(s)) et sur le dépôt E, lorsque celui-ci existe.

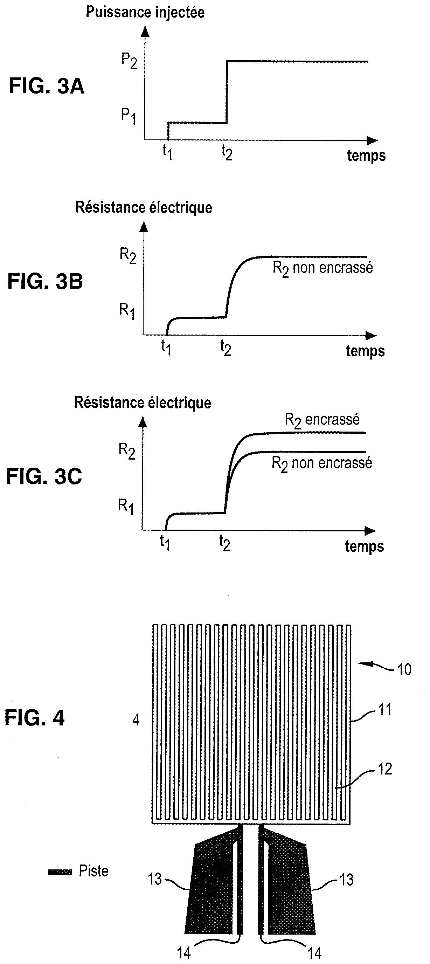

La figure 3A illustre la courbe temporelle de la puissance ainsi appliquée sur la résistance R, cette puissance étant au niveau P1 entre un temps t1 et un temps t2, puis passant à un niveau P2 plus important à partir de l'instant t2.

La puissance P1 est typiquement de quelques dixièmes de watt (de 0,1 à 1 watt, typiquement comprise entre 0,2 et 0,8 watt), tandis que la puissance P2 est quant à elle typiquement de plusieurs watts (de 1 à 10 watts, par exemple comprise entre 2 et 6 watts).

La durée entre l'instant t2 et l'instant t1 pendant laquelle la puissance P1 est appliquée est typiquement de quelques dizaines de secondes, la puissance P2 étant typiquement appliquée pendant une durée de quelques centaines de secondes.

Ces durées et leur enchaînement sont choisis de manière à rester dans la même unité de temps pour assurer la stabilité des conditions de fonctionnement et atteindre un régime thermique stabilisé à la fin de l'application des puissances P1 et P2, l'obtention de ce régime thermique stabilisé étant aisément à la porte de l'homme du métier.

Du fait de la faible valeur de la puissance P1 appliquée pour que le flux de chaleur provoqué par l'effet Joule ait une influence limitée à la plaque P seule, la valeur R1 de la résistance R ne dépend que des conditions de fonctionnement que la plaque P soit ou non encrassée par le dépôt E. En revanche, lors de l'application de la puissance P2 plus élevée, la valeur R2 de cette résistance R dépend à la fois des conditions de fonctionnement et du fait que la plaque P est ou non encrassée (figures 3B et 3C).

Une fois les valeurs R1 et R2 de la résistance R déterminées, on détermine une fonction de ces deux valeurs, typiquement la soustraction de l'une à l'autre (étape 3). Les flux thermiques transitant au travers de la résistance R se trouvant affectés par l'échange de conduction de chaleur à la paroi et étant donc dépendants du niveau d'encrassement de la surface considérée et des conditions de fonctionnement, la valeur de la fonction des résistances ainsi obtenue constitue une valeur caractéristique du niveau d'encrassement de ladite surface. En outre, cette valeur a l'avantage d'être affranchie des conditions autour de ladite surface et notamment des conditions de variation de débit ou de température.

Cette valeur fonction de R1 et R2 ainsi calculée fait ensuite l'objet d'un post-traitement (étape 4), par exemple de suivi dans le temps, filtrage et comparaison à des valeurs seuils.

Comme on l'aura compris, avec le procédé qui est ainsi proposé, la mesure est non-intrusive (puisque distante de la zone d'encrassement et ne perturbant pas la dynamique d'encrassement). Elle est globale en ce qu'elle intègre toute la surface occupée par la résistance. Elle peut s'adapter à des géométries et à des dimensions très diverses.

L'élément de détection que constitue l'élément sensible surfacique est par exemple un circuit électrique métallique 10 déposé sur un support diélectrique 11 (par exemple polyimide) de faible épaisseur lui assurant une certaine flexibilité et donc une adaptation facilitée à presque tout type de support. Cet élément de détection 10 est de forme libre. Il s'étend sur une zone de sensibilité planaire de quelques millimètres carrés à quelques centimètres carrés, la taille de cette zone étant fonction de la taille de l'échantillon ou de la zone à étudier.

La figure 4 donne un exemple de configuration possible pour cet élément de détection. Il comprend un « patch » de forme carrée (côté de largeur L1 = 40 mm) sur lequel un circuit en serpentin 12 est déposé et qui est alimenté par deux pistes 13 destinées à être connectées à une alimentation extérieure, deux autres pistes 14 - disposées en parallèle aux pistes 13 - permettant par ailleurs la mesure de la tension d'alimentation de cet élément de détection 10.

D'autres formes sont bien entendu possibles pour cette résistance, qui peut être également rectangulaire, ovale, circulaire, voire de forme plus complexe.

Cette résistance doit être placée en contact thermique avec l'échangeur étudié, au plus près de la face où se situe l'encrassement. Le circuit en serpentin peut par exemple être directement déposé sur la surface de l'échangeur.

Le circuit déposé peut être du Nickel, du Platine ou du Cuivre, ou tout alliage à base de ces métaux, car tout trois possèdent la propriété d'avoir un coefficient de température (K¹) élevé. D'autres types de métaux peuvent être utilisés, si ceux-ci présentent un bon coefficient thermoélectrique, soit une bonne variation de résistance proportionnelle à la température du circuit.

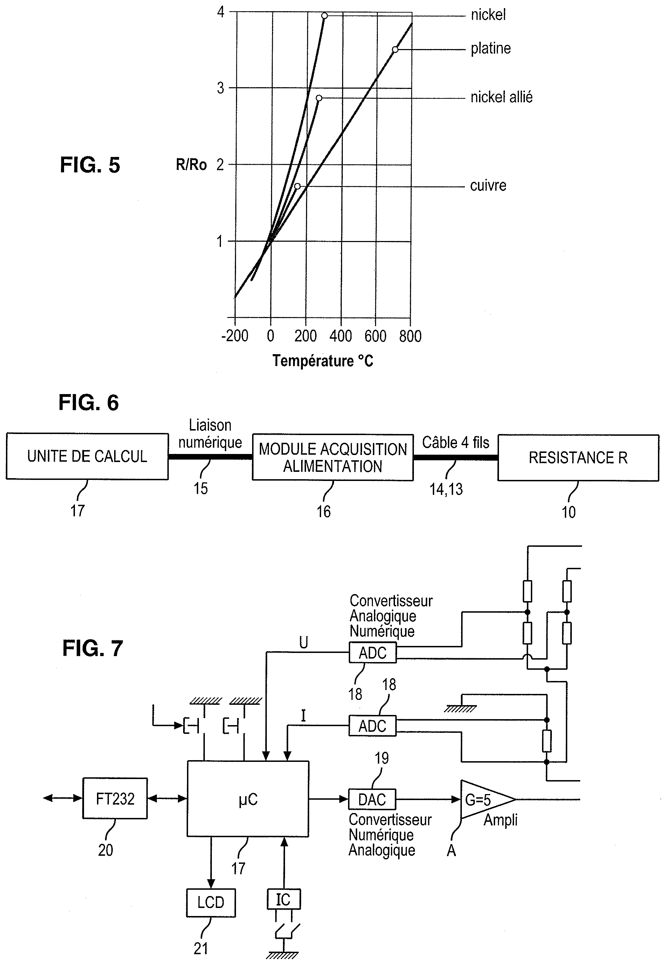

Des courbes de cette variation de résistance ohmique en fonction de la température pour du cuivre, un alliage de Nickel, du Nickel pur ou du Platine sont données par la figure 5.

En variante encore, la résistance R peut être directement sérigraphiée sur le support final (paroi d'échange) ; le système est d'autant moins intrusif et permet de fonctionner à des températures élevées.

Comme l'illustre la figure 6, l'élément de détection 10 que constitue la résistance surfacique chauffante 10 est relié électroniquement, par un câble à 4 fils (les fils 13 et 14) à un module d'alimentation et d'acquisition 16.

Ce module électronique 16 alimente électriquement la sonde 10 à résistance variable en maintenant en temps réel une puissance dissipée constante au cours du temps, et ce selon le cas soit à un niveau P1, soit à un niveau P2. A cet effet, il adapte en temps réel la tension U aux bornes des fils 14 pour que le produit tension par intensité reste constant.

Pour cela un microcalculateur 1, relié en série au module 16 par exemple par un câble USB, analyse en permanence le produit tension par intensité et le régule autour de la consigne fixée au départ. La consigne en puissance est variable, de très petites valeurs (quelques dixièmes de watt à quelques watts). La petite puissance P1 permet de mesurer la résistance sans produire d'échauffement significatif de celle-ci (principe des thermistances et autres PT100, PT1000). La forte puissance P2 génère un échauffement thermique impliquant une modification significative de la résistance ohmique de la sonde.

De ces deux mesures, le calculateur déduit la valeur de la fonction de R2 et R1, laquelle est corrélée à l'épaisseur de dépôt.

Le module électronique 16 possède à cet effet une sortie numérique permettant de transférer l'évolution des grandeurs U et I en temps réel au calculateur 17, lequel détermine la valeur de la résistance ohmique (rapport de U par I). En variante, le calculateur 17 peut être un microcalculateur intégré au module électronique pour réaliser directement les calculs de résistance et de valeurs différentielles.

Les caractéristiques du module électronique sont par exemple les suivantes :
- tension maximale 24Vdc courant maximal 2Adc ;
- Puissance réglable de 0,2W à 10W par pas de 0.01W pour des sondes dont la résistance varie entre 3 et 50 Ohms ;
- Mesure de courant/tension avec une résolution de 18bits et une précision meilleure que 1% ;
- Connexion de la résistance en 4fils ;
- Régulation de la puissance meilleure que 1% ;
- Vitesse d'échantillonnage 10 Pts/s.

Le calculateur 17 récupère les données en temps réel sous forme de fichier numérique et met en œuvre un post-traitement de ces informations pour identifier l'évolution de l'encrassement. Ce traitement consiste par exemple à analyser l'évolution de la valeur différentielle de la résistance électrique R, laquelle augmente au fur et à mesure que le dépôt se forme.

Un exemple de réalisation du module d'acquisition de données de régulation de puissance intégrant le calculateur 17 est présenté sur la figure 7. Le calculateur 17 est un microcalculateur qui reçoit de deux convertisseurs analogiques/numériques 18 des valeurs de tension U et d'intensité I mesurées sur la résistance surfacique R. Ce calculateur 17 transmet, par l'intermédiaire d'un convertisseur numérique/analogique 19 et d'un amplificateur A la tension appliquée à la résistance surfacique R pour maintenir la puissance injectée sur celle-ci au niveau P1 ou au niveau P2.

Il est par ailleurs relié par une liaison 20, par exemple de type RS232, à des moyens de traitement externes (non représentés). Des moyens d'interface 21 sont le cas échéant prévus localement pour par exemple permettre d'afficher les mesures réalisées au niveau du module.

La technique qui vient d'être décrite présente de nombreux avantages. Elle ne nécessite qu'une électronique particulièrement simple qui peut être réalisée de façon compacte et peut être facile à embarquer.

Elle est en outre d'une réalisation peu onéreuse.

Elle est d'une grande robustesse et fiabilité, tout en étant facilement adaptable à toute forme et toute taille d'échangeur.

Elle permet en outre une mesure globale de l'encrassement pour l'ensemble de la surface instrumentée au sein de l'échangeur et non pas ponctuelle, et un suivi dans le temps tout en étant parfaitement non-intrusive.

## Revendications

1. Procédé pour la détection et/ou la mesure de l'encrassement dans un échangeur selon lequel on mesure à deux instants différents la valeur résistive (R1, R2) d'une résistance (R) disposée au niveau d'une paroi (P) de cet échangeur et on détermine une valeur de mesure fonction des valeurs résistives mesurées à ces deux instants,
où la résistance (R) est surfacique, et est disposée le long de la paroi (P) à l'extérieur de l'échangeur, et la résistance (R) est soumise successivement à deux niveaux de puissance (P1, P2) que l'on maintient chacun pendant une certaine durée, le premier niveau de puissance (P1) étant appliqué pendant une première durée (t2-t1) et le deuxième niveau de puissance étant appliqué pendant une deuxième durée consécutive à la première durée, le premier niveau de puissance (P1) étant inférieur au second (P2), les mesures des deux valeurs résistives (R1, R2) étant respectivement effectuées lors de l'application de ces deux niveaux de puissance, le premier niveau de puissance (P1) étant choisi pour que le flux de chaleur provoqué par effet Joule soit pendant ladite première durée (t2-t1) confiné à la paroi (P), et le deuxième niveau de puissance (P2) étant choisi de façon que le flux de chaleur provoqué par effet Joule ait un impact à la fois sur la paroi (P) et sur un dépôt d'encrassement, lorsque celui-ci existe.

2. Procédé selon la revendication 1, **caractérisée en ce que** la fonction des valeurs résistives est la différence de valeur résistive mesurée à deux instants successifs correspondant aux deux niveaux de puissance.

3. Procédé selon la revendication précédente, **caractérisé en ce que** l'on suit en temps réel la différence de valeur résistive mesurée (R2-R1).

4. Procédé selon l'une des revendications précédentes, **caractérisé en ce que** l'on adapte en temps réel la tension (U) appliquée à la résistance (R) pour que la puissance (P1, P2) à laquelle on soumet cette résistance reste constante pendant une certaine durée.

5. Dispositif pour la détection et/ou la mesure d'encrassement dans un échangeur comprenant une paroi (P), comportant une résistance surfacique (R) destinée à être disposée le long de la paroi (P) à l'extérieur de l'échangeur, des moyens (16) pour alimenter avec une puissance constante ladite résistance surfacique (R), ainsi que des moyens de traitement (17) configurés pour mettre en œuvre un procédé selon l'une des revendications précédentes.

6. Dispositif selon la revendication 5, **caractérisé en ce que** la résistance (R) surfacique présente un support diélectrique (11) lui permettant de s'adapter à la forme de l'échangeur.

7. Dispositif selon l'une des revendications 5 à 6, **caractérisé en ce que** la résistance (R) surfacique présente un circuit résistif en serpentin (12).

8. Utilisation du procédé selon l'une des revendications 1 à 4 pour la détection et/ou la mesure d'encrassement dans l'industrie agro-alimentaire ou dans des applications de thermique industrielle.

9. Utilisation du dispositif selon l'une des revendications 5 à 7 pour la détection et/ou la mesure d'encrassement dans l'industrie agro-alimentaire ou dans des applications de thermique industrielle.

## Patentansprüche

1. Verfahren für das Erkennen und / oder das Messen der Verschmutzung in einem Tauscher, nach dem in zwei unterschiedlichen Momenten der ohmsche Wert (R1, R2) eines Widerstandes (R) gemessen wird, der an einer Wand (P) dieses Tauschers angeordnet ist, und ein Messwert in Abhängigkeit von den in diesen zwei Momenten gemessenen ohmschen Werten bestimmt wird,
wobei der Widerstand (R) flächenbezogen ist und entlang der Wand (P) außerhalb des Tauschers angeordnet ist und der Widerstand (R) sukzessive zwei Leistungsniveaus (P1, P2) unterworfen wird, die jeweils während einer bestimmten Dauer gehalten werden, wobei das erste Leistungsniveau (P1) während einer ersten Dauer (t2-t1) angewendet wird und das zweite Leistungsniveau während einer auf die erste Dauer folgende zweite Dauer angewendet wird, wobei das erste Leistungsniveau (P1) unterhalb des zweiten (P2) ist, wobei die Messungen der zwei ohmschen Werte (R1, R2) jeweils bei der Anwendung dieser zwei Leistungsniveaus durchgeführt werden, wobei das erste Leistungsniveau (P1) ausgewählt wird, damit der per Joule-Effekt hervorgerufene Wärmestrom während der genannten ersten Dauer (t2-t1) an der Wand (P) angegrenzt wird und wobei das zweite Leistungsniveau (P2) derart ausgewählt wird, dass der per Joule-Effekt hervorgerufene Wärmestrom eine Auswirkung sowohl auf die Wand (P) als auch auf eine Verschmutzungsablagerung hat, wenn diese vorhanden ist.

2. Verfahren gemäß Anspruch 1, **dadurch gekennzeichnet, dass** die Funktion der ohmschen Werte die ohmsche Wertdifferenz ist, die in zwei sukzessiven Momenten gemessen wird, die den zwei Leistungsniveaus entsprechen.

3. Verfahren gemäß dem voranstehenden Anspruch, **dadurch gekennzeichnet, dass** der gemessene ohmsche Differenzwert (R2-R1) in Echtzeit verfolgt wird.

4. Verfahren gemäß einem der voranstehenden Ansprüche, **dadurch gekennzeichnet, dass** die auf den Widerstand (R) angewendete Spannung (U) in Echtzeit angepasst wird, damit die Leistung (P1, P2), der dieser Widerstand unterworfen wird, während einer bestimmten Dauer konstant bleibt.

5. Vorrichtung für das Erkennen und / oder das Messen einer Verschmutzung in einem eine Wand (P) umfassenden Tauscher, umfassend einen flächenbezogenen Widerstand (R), der dazu bestimmt ist, entlang der Wand (P) an der Außenseite des Tauschers angeordnet zu sein, Mittel (16) zum Versorgen des genannten flächenbezogenen Widerstandes (R) mit einer konstanten Leistung sowie Verarbeitungsmittel (17), die ausgestaltet sind, um ein Verfahren gemäß einem der voranstehenden Ansprüche umzusetzen.

6. Vorrichtung gemäß Anspruch 5, **dadurch gekennzeichnet, dass** der flächenbezogene Widerstand (R) einen dielektrischen Träger (11) aufweist, der es ihm ermöglicht, sich an die Form des Tauschers anzupassen.

7. Vorrichtung gemäß Anspruch 5 bis 6, **dadurch gekennzeichnet, dass** der flächenbezogene Widerstand (R) eine ohmsche Schaltung in Serpentinen (12) aufweist.

8. Verwendung des Verfahrens gemäß einem der Ansprüche 1 bis 4 für das Erkennen und /oder das Messen einer Verschmutzung in der Lebensmittelindustrie oder in industriellen Wärmeanwendungen.

9. Verwendung der Vorrichtung gemäß einem der Ansprüche 5 bis 7 für das Erkennen und / oder das Messen einer Verschmutzung in der Lebensmittelindustrie oder in industriellen Wärmeanwendungen.

## Claims

1. Method for the detection and/or measurement of fouling in a heat exchanger, whereby the resistance value (R1, R2) of a resistor (R) arranged on a wall (P) of this exchanger is measured at two different instants, and a value of the measurements that is a function of the resistance values measured at these two instants is determined, where the resistor (R) is a surface resistor and is disposed along the wall (P) outside the heat exchanger, the resistor (R) is subjected in succession to two power levels (P1, P2) that are each maintained for a certain duration, the first power level (P1) being applied during a first duration (t2-t1), and the second power level is applied during a second duration following the first duration, the first power level (P1) being lower than the second power level (P2), the measurements of the two resistance values (R1, R2) being respectively carried out during application of these two power levels, the first power level being chosen so that the heat flow caused by the Joule effect during the first duration is confined to the wall (P) and the second power level (P2) being chosen so that the heat flow caused by the Joule effect has an impact both on the exchanger and on the fouling deposit if any.

2. The method according to claim 1, **characterized in that** the function of the resistance values is the difference in resistance values measured at two successive instants corresponding to the two power levels.

3. The method according to any of the preceding claims, **characterized in that** the differential measurement value (R2-R1) thus obtained is monitored in real time.

4. The method according to any of the preceding claims, **characterized in that** the voltage (U) applied to the resistor (R) is adapted in real time so that the power (P1, P2) to which this resistor is subjected remains constant for a certain time.

5. Device for the detection and/or measurement of fouling in a heat exchanger, comprising a resistor (R) adapted to be arranged on a wall (P) outside this exchanger, means (16) for supplying said resistor (R) with constant power, and processing means (17), these different means being capable of implementing the method according to any of the preceding claims.

6. The device according to claim 5, **characterized in that** the surface resistor (R) has a dielectric substrate (11) allowing it to adapt to the form of the exchanger.

7. The device according to any of claims 5 to 6, **characterized in that** the surface resistor (R) has a coiled resistive circuit (12).

8. Use of the method according to any of claims 1 to 4 for the detection and/or measurement of fouling in the agri-foodstuff industry or in industrial thermal applications.

9. Use of the device according to any of claims 5 to 7 for the detection and/or measurement of fouling in the agri-foodstuff industry or in industrial thermal applications.
